# EUROPÄISCHE PATENTANMELDUNG

(11) **EP 2 623 800 A1**
(43) Veröffentlichungstag der Anmeldung: **07.08.2013**
(21) Anmeldenummer: 12153239.4
(22) Anmeldetag: 31.01.2012
(51) Int. Cl.: F16C 27/02, F16C 17/02

(54) **Gleitlager**

(71) Anmelder: Technische Universität Darmstadt, 64283 Darmstadt (DE)
(72) Erfinder: Chasalevris, Athanasios, 60598 Frankfurt a.M. (DE); Dohnal, Fadi, 5430 Wettingen (CH)
(74) Vertreter: Stumpf, Peter

(57) **Zusammenfassung**

Die vorliegende Erfindung betrifft ein neuartiges Gleitlager, sowie ein Betriebsverfahren für dieses.

Erfindungsgemäß wird vorgeschlagen eine zusätzliche Schmierfilmdicke im Lager zu erzeugen, um die dynamischen Lagereigenschaften zu verändern. Der Lagerschale ist geteilt, der obere Teil ist fest mit dem Gehäuse fest verbunden und der untere Teil beweglich und mit vorgespannten Federelementen und einem viskosen Dämpferelement montiert. Dies ermöglicht eine relative Bewegung zwischen den beiden Lagerhalbschalen. Bei Resonanzdurchfahrt werden die vorgespannten Federelemente überbrückt und die beweglichen Lagerhalbschale ausgelenkt was zu einer zusätzlichen Schmierfilmzone im Lager unter dieser passive Verschiebung führt. Das allgemeine Konzept ist es mit dieser zusätzlichen Schmierfilmzone die Dämpfungs- und Steifigkeitskoeffizienten zu verändern, aber nur dann wenn das System die kritische Drehzahl durchläuft, um die Rotorschwingung zu verkleinern. Für Drehzahlen außerhalb des Resonanzbereichs ist das Lager fixiert (geschlossen) und verhält sich so wie es unter den nominellen Betriebsbedingungen entworfen wurde.

## Beschreibung

Die vorliegende Erfindung betrifft ein neuartiges Gleitlager, sowie ein Betriebsverfahren für diese Bauart von Gleitlagern.

### Stand der Technik

Im Stand der Technik sind eine Vielzahl von Gleitlagern bekannt, auch solche, welche ebenfalls zusätzliche Feder- und Dämpferelemente aufweisen.

So wird in der DE 3328362 A1 ein Gleitlager beschrieben, bei der ein Federelement seitlich an einer Gleitlagerhalbschale und ein Quetschöldämpfer an der anderen Gleitlagerhalbschale angeordnet sind.

In DE 1269842 A wird ein Gleitlager beschrieben, wobei die Unterschale aus 3 halbzylindrischen Ringen besteht. Der mittlere Ring ist im Durchmesser kleiner und ist durch elastische Stäbe mit den Außenringen verbunden. Weiterhin ist der mittlere Ring auf perforierte Bleche mit Ölfilm (Dämpferelement) aufgesetzt. Beim Einschub einer Welle wird der mittlere Ring auf den Dämpfer gedrückt. Die elastischen Stäbe bewirken eine federnde Rückstellung des mittleren Ringes.

In der DE 3031562 A1 wird ein Dämpferelement für Kugellager beschrieben, das aus perforierten Blechen und einem Ölfilm besteht. In der DE 360961 A1 wird ebenfalls ein Dämpferelement für Kugellager beschrieben, das aus perforierten Blechen (mit Federwirkung) und einem Ölfilm besteht. Eine analoge Anordnung findet sich in DE 19613471 A.

In der EP 1686274 B1 wird ein Dämpferelement für Kugellager mit inkompressiblen Werkstoffen beschrieben.

In den vorgenannten und weiteren Schriften wird zur Beschränkung der maximalen Schwingungen des Lagerzapfens bei Resonanzdurchfahrt externe Dämpfungselemente am Lagergehäuse oder am Rotor angebracht, Fanglager installiert oder der Rotor schnell durch die Resonanz gefahren. Zum Beispiel erfordern Gleitlager in Großturbinen den Einbau von großen externen Dämpfungselementen, die eine Dämpfung in der Größenordnung von der bereits im Gleitlager vorhandenen Dämpfung.

Im vorliegenden Anspruch wird die Rotorauslenkung durch die direkte Veränderung der Lagereigenschaften verringert und nicht durch externe, nachgeschaltet Federund Dämpferelemente.

### Aufgabe

Die Aufgabe der Erfindung ist diese Nachteile im Stand der Technik durch Vorsehung eines entsprechenden verstellbaren Gleitlagers und eines entsprechenden Betriebsverfahrens zu beseitigen.

### Lösung der Aufgabe

Diese Aufgabe wird bezüglich des Gleitlagers gelöst durch den Gegenstand des Anspruchs 1 und bezüglich des Betriebsverfahrens gelöst durch den Gegenstand des Anspruchs 8.

Vorteilhafte Ausführungsbeispiele werden im Folgenden beschrieben oder/und sind in den Unteransprüchen beschrieben.

Die Erfindung beinhaltet den neuartigen Aufbau eines Gleitlagers. Bei diesem wird - erfindungsgemäß - eine Welle mittels zweier halbzylindrischer Gleitlagerschalen in Position gehalten.

Die Gleitlagerschalen sind so angeordnet, dass ein geringer Zwischenraum (Spalt) zwischen Welle und Lagerschalen entsteht, der durch ein Schmiermittel (z. B. Öl) ausgefüllt wird.

Frühere Untersuchungen haben gezeigt, dass bei Resonanzdurchfahrt große Schwingungsausschläge des Lagerzapfens (Welle) entstehen und damit zu einer intensiven Beanspruchung des Lagers und dessen Komponenten als auch zu einer erhöhten Rotorbeanspruchung führen. Zur Beschränkung der maximalen Schwingungen des Lagerzapfens bei Resonanzdurchfahrt werden üblicherweise externe Dämpfungselemente am Lagergehäuse oder am Rotor angebracht, Fanglager installiert oder der Rotor schnell durch die Resonanz gefahren.

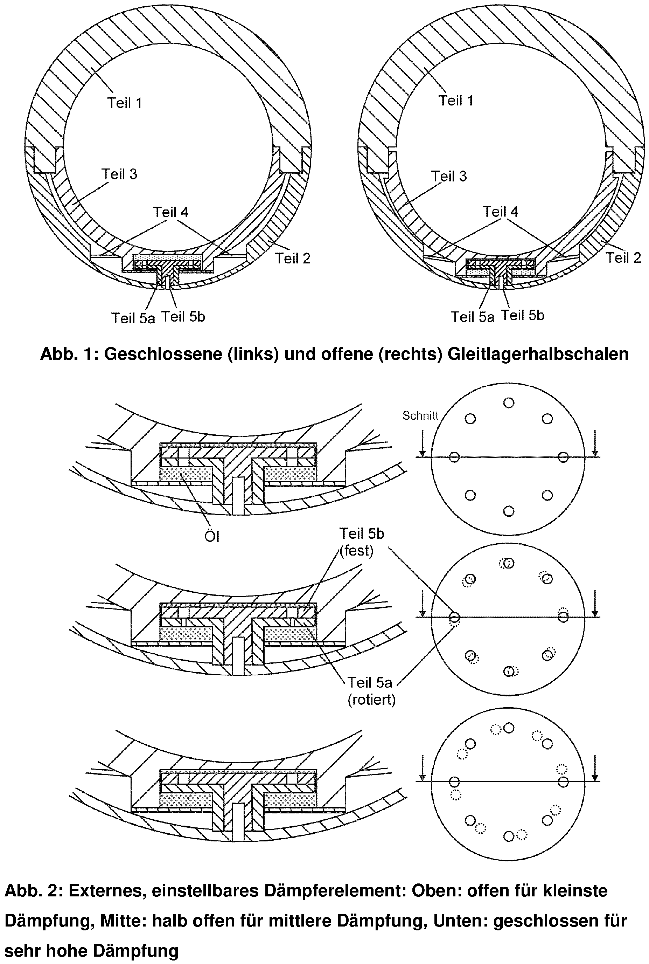

Erfindungsgemäß wird durch eine beweglich, angeordnete Gleitlagerhalbschale der Abstand zur Welle (Lagerzapfen) so verändert, dass eine zusätzliche Schmierfilmdicke erzeugt wird, die kleinere Schwingungsausschläge bei Resonanzdurchfahrt ermöglicht. Wenn der Rotor in einen Resonanzzustand gerät (Resonanzdurchfahrt durch kritische Drehzahl), wird der Spalt zwischen der Welle und der Lagerschalen so verändert, dass der Zwischenraum von der Welle zu mindestens einer der Gleitlagerschalen, wie in Abb. 2 - gegenüber dem Normalzustand in Abb. 1 - dargestellt, selbständig (passiv) etwas vergrößert wird.

Dazu wird eine neuartige Anordnung und Ausführung der Lagerschalen gewählt, welche - im Vergleich zum Stand der Technik - die überwiegende Energieabsorption im Fall der Resonanz der Welle innerhalb eines zusätzlich - und nur im Fall der Resonanz - erzeugten Schmiermittelbereichs ermöglicht. Das Schließen und Öffnen der beweglichen Gleitlagerhalbschale in Resonanznähe erfolgt selbständig durch vorgespannte, verstellbare, externe Federelemente. Ein zusätzlich verstellbareres, externes Dämpferelement ermöglicht, das die bewegliche Gleitlagerhalbschale in Resonanznähe geöffnet bleibt und so der zusätzliche Schmierfilm wirken kann.

In den meisten im Stand der Technik bekannten Gleitlagern sind zwar auch Federelemente vorgesehen diese sind jedoch überwiegend nur zum Zusammenhalt von Lagerelementen, oder zur breiteren Auswahl der Gesamtelastizität von Lager und Federelementeinheit vorgesehen. Erfindungsgemäß dienen die Federelemente als passives Steuerelement zur Änderung der wirksamen Schmierfilmdicke bei Resonanzdurchfahrt. Zudem ist das erfindungsgemäße Gleitlager so aufgebaut, dass sie die Vorspannung der Federelemente ändern lässt und sogar noch im eingebauten Zustand ändern lässt.

### Ausführungsbeispiele

Die folgenden Abbildungen zeigen verschiedene Ausführungsbeispiele des erfindungsgemäßen Gleitlagers. Es zeigen:
Abb. 1: Das erfindungsgemäße Gleitlager in einem Querschnitt. Geschlossene (links) und offene (rechts) Gleitlagerhalbschalen
Abb. 2: Externes, einstellbares Dämpferelement: Oben: offen für kleinste Dämpfung, Mitte: halb offen für mittlere Dämpfung, Unten: geschlossen für sehr hohe Dämpfung
Abb. 3: Explosionszeichnung des erfindungsgemäßen Gleitlagers nach dem Ausführungsbeispiel in Abb. 1
Abb. 4: Zusammenbau des erfindungsgemäßen Gleitlagers nach dem Ausführungsbeispiel in Abb. 1

Abb. 1 zeigt ein erstes Ausführungsbeispiel des erfindungsgemäßen Gleitlagers bestehend aus einer oberen Lagerhalbschale (1) und einer unteren beweglichen Lagerhalbschale (3).

Beide Lagerhalbschalen (1, 3) dienen der Lagerung einer -nicht gesondert dargestellten - mit einem Schmiermittel umfänglich überzogenen Welle.

Im unteren Teil von Abb. 1 ist ein Dämpfungselement (5) dargestellt, das fest mit dem Gehäuse (2) verbunden ist. Die zweite, in diesem Beispiel untere, Halblagerschale ist gegenüber der oberen Lagerschale (1) und dem Dämpfungselement (5) vertikal beweglich angeordnet. Wie in Abb. 1 dargestellt, bilden die Elemente 2 und 3 im unteren Bereich einen Hohlraum aus. In diesem Hohlraum ist ein mit dem Gehäuse verbundener Dämpferkolben (5) und ein Dämpfungsfluid, in diesem Beispiel Öl, angedeutet sind. Der Dämpferkolben (5) besteht aus zwei Teilen: Teil (5a) und Teil (5b). Teil (5b) besteht aus einer Platte, das mit einem Steg am Gehäuse fest verbunden ist. Der Steg hat einen runden Querschnitt. Die Platte ist mit Bohrungen versehen. Durch diese Durchlauföffnungen fliest das Öl, Wasser oder eine andere Flüssigkeit von einer Seite des Kolbens auf die andere Seite. Die Bohrungen oder Durchlauföffnungen sind verschließbar. Dazu wird bevorzugt eine weitere Platte (5a) beweglich zur festen Platte um den Steg beweglich angebracht. Die bewegliche Platte hat Bohrungen an denselben Stellen wie die feste Platte. Eine andere Ausführungsform sieht größere, kleinere, mehrere oder weniger Bohrungen in der beweglichen Platte als in der festen Platte vor. Die bewegliche Platte ist so verschiebbar, dass die Bohrungen der beweglichen und festen Platte vollständig übereinanderliegen. Somit ist ein maximaler Durchgang des Fluids gegeben. Durch Verdrehung der beweglichen Platte ist der Durchgang des Fluids vollständig reduzierbar. In diesem Fall sind die Bohrungen durch die bewegliche Platte verschlossen. (in dem Querschnitt der Abb. 1 "T-förmig").

Abb. 1 zeigt auf der linken Seite den Zustand bei normalem Betrieb des Rotors, d. h. weit weg von Resonanzdrehzahlen, die etwa beim Hochfahren eines Schiffsdiesels, einer Turbine oder bei der Frequenzänderung eines Elektromotors durchfahren werden. Bei diesem Betrieb drücken die Federelemente die Gleitlagerhalbschale gegen die Welle und halten das Lager geschlossen.

Bei Resonanzdurchfahrt verstärken sich die Schwingungsausschläge. Dadurch wird die bewegliche untere Lagerhalbschale (3) nach unten ausgelenkt. Das vergrößert den effektiven Spalt von der Welle zur beweglichen Lagerschale. Die Rückstellbewegung der Lagerschale wird durch drei Effekte beeinflusst. Erstens bewirkt die Feder (4) eine Rückstellbewegung der Lagerschale. Zweitens wirkt der Dämpfer (5) dieser Rückstellbewegung entgegen. Drittens wird Bewegung der Lagerschale durhc die wirkenden Fluidkräfte beeinflusst. Durch den Dämpfer wird ein schnelles Schließen verhindert.

Im Resonanzbereich ist die Federkraft nicht ausreichend um die Rückstellbewegung der Lagerschale auszuführen. Das entspricht eine Überbrückung der vorgespannten Federelemente (4). Diese passive Verschiebung der Lagerhalbschale führtzu einer zusätzlichen Schmierfilmzone. Während dieser Bewegung wird das Öl im Dämpferelement (5) passiv von einer Kammer in die andere gedrückt. Dieser Zustand ist in Abb. 1 auf der rechten Seite dargestellt.

Abb. 2 zeigt ein einstellbares Dämpferelement für drei verschiedene Stellungen der Durchlauföffnungen. Damit ist die externe Dämpfung nach dem Zusammenbau veränderbar und kann an die jeweiligen Betriebsbedingungen angepasst werden.

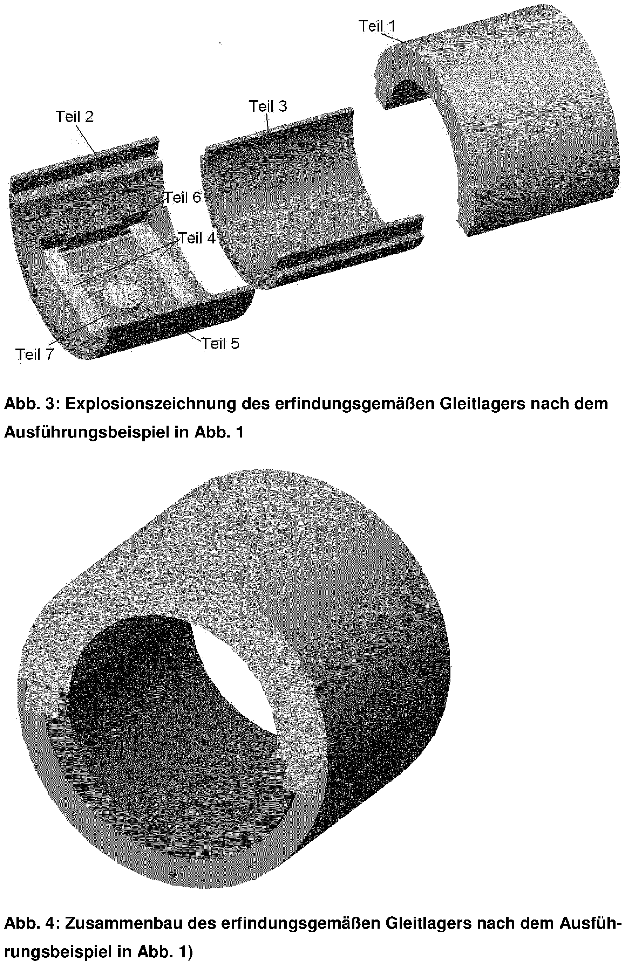

Abb. 3 zeigt in einer Explosionszeichnung die genaue Ausbildung und die einzelnen Bauteile zur Ausbildung des Gleitlagers - gemäß diesem Ausführungsbeispiel.

Abb. 4 zeigt dann das zusammengebaute Gleitlager in einer dreidimensionalen Darstellung.

Nach diesem - hier in den Abbildungen dargestellten Ausführungsbeispiel - werden im Wesentlichen zwei Baueinheiten verwendet. Zum einen kommen vorgespannte Federelemente zum Einsatz, die die bewegliche Lagerschale außerhalb des Resonanzbereichs geschlossen halten und bei Resonanzdurchfahrt eine Auslenkung der beweglichen Lagerschale ermöglichen. Zum anderen wird ein Dämpferelement eingesetzt, der schnelle Positionsänderungen der beweglichen Lagerhalbschale verhindert. Im Resonanzfall würde sich die Position der beweglichen Lagerhalbschale ohne Dämpfer permanent ändern. Durch den Dämpfer erfolgt eine Verzögerung der Bewegung der beweglichen Lagerhalbschale und es kann somit ein optimaler Zwischenraum zur Ausbildung einer zusätzlichen Schmierfilmzone eingestellt werden.

Der Aufbau des Gleitlagers ist in der Art, dass die untere bewegliche Lagerhalbschale direkt mit dem Dämpferelement verbunden ist. Die untere Gleitlagerschale liegt weiterhin auf vorgespannten Federelementen auf.

Entsprechend der Dauer des Durchlaufens eines Resonanzbereiches sind die Größe der Vorspannung der Federelemente und die Größe der Dämpfung durch geeignete Wahl einzustellen. Beide Größen können im ausgeführten Beispiel nach dem Zusammenbau verändert werden.

Vorteilhaft an diesem Ausführungsbeispiel ist der Umstand, dass bei Resonanzdurchfahrt eine zusätzlichen Schmierfilmzone ausgebildet wird was zu einer Änderung der dynamischen Lagereigenschaften führt und damit zu Verringerung der Rotorauslenkungen.

Nicht dargestellt ist eine Ausführungsform, bei welcher die Federn, aber auch der Dämpfer durch Aktoren ersetzt sind. Die Aktoren umfassen Piezokristalle, Hydraulik, Pneumatik, Bimetalle, Elektromechanische, Formgedächtnislegierungen und Kombinationen dieser. Bei diesen gennanten Ausführungsform wird eine aktive Regelung, etwa durch elektrische Aktoren, die die Bewegung der beweglichen Lagerhalbschale ausführen, realisiert.

Das erfindungsgemäße Verfahren zum Betrieb eines Gleitlagers sieht vor, dass für die Dauer des Durchlaufens eines Resonanzzustandes zwischen Welle und Lagerelementen ein zusätzlicher Schmiermittelbereich vorgesehen wird.

### Bezugszeichenliste

1) Erste Halblagerschale (bevorzugt fix)
2) Basis für externen Dämpfer (bevorzugt fix)
3) Untere Lagerhalbschale (bevorzugt beweglich)
4) Externe Federelemente (verstellbar)
5) Externe Dämpferelement
6) Schrauben für Verstellung von (4)
7) Schrauben für Verstellung von (5)

## Patentansprüche

1. Gleitlager zur Lagerung einer Welle, aufweisend Lagerhalbschalen, **dadurch gekennzeichnet, dass** das Gleitlager mindestens eine, radial gegen die Welle nach außen bewegliche Lagerschale (3) aufweist und an die bewegliche Lagerschale (3) angreifende Rückstellmittel (4) zur Rückbewegung der Lagerschale in die Lagermitte vorgesehen sind.

2. Gleitlager nach Anspruch 1, **dadurch gekennzeichnet, dass** zusätzlich zu den Rückstellmitteln (4), ebenso an die Lagerschale angreifende Dämpfungsmittel (5) vorgesehen sind.

3. Gleitlager nach einem der Ansprüche 1 oder 2, **dadurch gekennzeichnet, dass** die Rückstellmittel (4) und die Dämpfungsmittel (5) so in Ihrer Stärke zueinander eingestellt oder einstellbar ausgeführt sind, dass während der Resonanzdurchfahrt die bewegliche Lagerschale (3) öffnet und außerhalb des Resonanzbereichs geschlossen bleibt.

4. Gleitlager nach einem der Ansprüche 1 bis 2, **dadurch gekennzeichnet, dass** das Gleitlager so ausgeführt ist, dass die mindestens eine bewegliche Lagerschale (3) passiv und erst in Resonanznähe des Rotors bewegt wird oder aktiv durch an die Lagerschale aufgrund der Detektion einer Resonanzdurchfahrt, von dem Gleitlager zugeordneten Detektionsmittel, von der festen Lagerschale weg bewegt wird.

5. Gleitlager nach einem der Ansprüche 1 bis 4, **dadurch gekennzeichnet, dass** das die Dämpfungsmittel in Form eines innerhalb der beweglichen Lagerschale (3) ausgebildeten Hohlraums, welcher mit einem Dämpfungsfluid gefüllt ist und eines darin und damit gegen die Schale verschieblichen Dämpferkolbens (5), ausgeführt ist.

6. Gleitlager nach Anspruch 5, **dadurch gekennzeichnet, dass** der Dämpferkolben (5) mit verstellbaren Löchern zur Durchströmung des Dämpfungsfluid versehenen Platte ausgebildet ist.

7. Gleitlager nach einem der Ansprüche 1 bis 6, **dadurch gekennzeichnet, dass** die Rückstellmittel (4) oder und die Dämpfungsmittel (5) während dem Betrieb des Gleitlagers und im zusammengebauten Zustand des Gleitlagers, in Ihrer Stärke einzeln oder gemeinsam variierbar ausgeführt sind.

8. Verfahren zum Betrieb eines Gleitlagers nach Anspruch 1 für eine Welle, **dadurch gekennzeichnet, dass** während des Durchlaufens der Welle durch einen Resonanzzustand mindestens bewegliches Lagerelement unter Ausbildung eines zusätzlichen Schmierfilmbereiches.
